(19) Europäisches Patentamt
European Patent Office
Office européen des brevets

(11) **EP 2 477 823 B1**

(12) **EUROPÄISCHE PATENTSCHRIFT**

(45) Veröffentlichungstag und Bekanntmachung des Hinweises auf die Patenterteilung:
**11.11.2015 Patentblatt 2015/46**

(21) Anmeldenummer: **10765567.2**

(22) Anmeldetag: **10.09.2010**

(51) Int Cl.:
**B42D 15/00** *(2006.01)*   **G02B 5/28** *(2006.01)*

(86) Internationale Anmeldenummer:
**PCT/EP2010/005563**

(87) Internationale Veröffentlichungsnummer:
**WO 2011/032665 (24.03.2011 Gazette 2011/12)**

(54) **DÜNNSCHICHTELEMENT MIT INTERFERENZSCHICHTAUFBAU**

THIN-LAYER ELEMENT HAVING AN INTERFERENCE LAYER STRUCTURE

ÉLÉMENT À COUCHE MINCE DOTÉ D'UNE STRUCTURE DE COUCHES D'INTERFÉRENCE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **15.09.2009 DE 102009041583**

(43) Veröffentlichungstag der Anmeldung:
**25.07.2012 Patentblatt 2012/30**

(73) Patentinhaber: **Giesecke & Devrient GmbH**
**81677 München (DE)**

(72) Erfinder:
• **FUHSE, Christian**
**83624 Otterfing (DE)**
• **RAHM, Michael**
**83646 Bad Tölz (DE)**

• **HEIM, Manfred**
**83646 Bad Tölz (DE)**
• **LIEBLER, Ralf**
**83727 Schliersee (DE)**

(74) Vertreter: **Zeuner Summerer Stütz**
**Patent- und Rechtsanwälte**
**Partnerschaft**
**Nußbaumstraße 8**
**80336 München (DE)**

(56) Entgegenhaltungen:
**EP-A1- 1 189 079    WO-A1-02/00445**
**WO-A1-03/068525    US-A1- 2001 028 921**

Bemerkungen:
Die Akte enthält technische Angaben, die nach dem Eingang der Anmeldung eingereicht wurden und die nicht in dieser Patentschrift enthalten sind.

EP 2 477 823 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Dünnschichtelement mit Interferenzschichtaufbau für Sicherheitspapiere, Wertdokumente und dergleichen, mit zumindest zwei semitransparenten, d.h. teiltransparenten Absorberschichten und zumindest einer zwischen den zumindest zwei Absorberschichten angeordneten dielektrischen Abstandsschicht. Die Erfindung betrifft ferner ein Durchsichtssicherheitselement und einen Datenträger mit einem derartigen Dünnschichtelement sowie optisch variable Farbpigmente für eine Druckfarbe, die durch derartige Dünnschichtelemente gebildet sind.

Datenträger, wie etwa Wert- oder Ausweisdokumente, oder andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Seit einigen Jahren haben sich Durchsichtsfenster als attraktive Sicherheitselemente in Polymer- und neuerdings auch in Papier-Banknoten erwiesen, da sie den Einsatz einer Vielzahl von Sicherheitsmerkmalen gestatten.

Eine besondere Rolle bei der Echtheitsabsicherung spielen Sicherheitselemente mit betrachtungswinkelabhängigen Effekten, da diese selbst mit modernsten Kopiergeräten nicht reproduziert werden können. Die Sicherheitselemente werden dabei mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/ oder ein anderes graphisches Motiv zeigen.

In diesem Zusammenhang ist bekannt, Sicherheitselemente mit mehrschichtigen Dünnschichtelementen einzusetzen, deren Farbeindruck sich für den Betrachter mit dem Betrachtungswinkel ändert, und beim Kippen des Dünnschichtelements beispielsweise von Grün nach Blau, von Blau nach Magenta oder von Magenta nach Grün wechselt. Das Auftreten derartiger Farbänderungen beim Verkippen eines Dünnschichtelements wird im Folgenden als 5 Farbkippeffekt bezeichnet.

US 2001/028 921 A1, EP 1 189 079 A1 oder WO 03/06 8525 A1 offenbart ein Dünnschichtelement gemäß dem Oberbegriff des Anspruchs 1.

Ausgehend davon liegt der Erfindung die Aufgabe zugrunde, ein Dünnschichtelement der eingangs genannten Art mit einem attraktiven visuellen Erscheinungsbild mit hoher Fälschungssicherheit anzugeben.

Diese Aufgabe wird durch das Dünnschichtelement, das Durchsichtssicherheitselement, die optisch variablen Farbpigmente und den Datenträger mit den Merkmalen der unabhängigen Ansprüche gelöst. Weiterbildungen der Erfindung sind Gegenstand der Unteransprüche.

Gemäß der Erfindung sind bei einem gattungsgemäßen Dünnschichtelement die beiden Absorberschichten jeweils aus einem Material mit einer komplexen Brechzahl $N = n + ik$ gebildet, deren Realteil $n$ und Imaginärteil $k$ sich zumindest in einem Teil des sichtbaren Spektralbereichs um einen Faktor 5 oder mehr unterscheiden.

Die beiden Absorberschichten können dabei aus demselben oder auch aus unterschiedlichen Materialien gebildet sein. Die Verwendung unterschiedlicher Materialien kann insbesondere aus produktionstechnischen Gesichtspunkten von Vorteil sein, beispielsweise um eine gute Schichthaftung auch der oberen Absorberschicht sicherzustellen. In einer bevorzugten Ausgestaltung sind die beiden Absorberschichten daher aus unterschiedlichen Materialien gebildet, wobei sich der Realteil $n1$ und Imaginärteil $k1$ des Materials einer der beiden Absorberschichten zumindest in einem Teil des sichtbaren Spektralbereichs um einen Faktor 5 oder mehr unterscheiden, und sich der Realteil $n2$ und Imaginärteil $k2$ des Materials der anderen der beiden Absorberschichten um einen Faktor 8 oder mehr, vorzugsweise um einen Faktor 10 oder mehr, besonders bevorzugt um einen Faktor 15 oder mehr unterscheiden.

In vorteilhaften Ausgestaltungen unterscheiden sich der Realteil $n$ und Imaginärteil $k$ der Materialien beider Absorberschichten zumindest in einem Teil des sichtbaren Spektralbereichs sogar um einen Faktor 8 oder mehr, vorzugsweise um einen Faktor 10 oder mehr, besonders bevorzugt um einen Faktor 15 oder mehr. Bevorzugt unterscheiden sich der Realteil $n$ und Imaginärteil $k$ des Materials zumindest einer der beiden Absorberschichten sogar im gesamten sichtbaren Spektralbereich um einen Faktor 5 oder mehr, um einen Faktor 8 oder mehr, um einen Faktor 10 oder mehr oder um einen Faktor 15 oder mehr.

Zumindest eine der Absorberschichten, vorzugsweise beide Absorberschichten, sind mit Vorteil aus Silber gebildet. Auch Gestaltungen, bei denen eine der Absorberschichten oder beide Absorberschichten aus Aluminium gebildet sind, haben sich bewährt. Die buntesten Farben in Transmission werden derzeit mit Silber/Dielektrikum/Silber-Schichtsystemen erreicht. Etwas weniger bunt, aber einfacher in der Herstellung sind Dünnschichtelemente mit einem Aluminium/Dielektrikum/Aluminium-Schichtsystem. Ebenfalls einfach herzustellen sind Silber/Dielektrikum/Aluminium-Schichtsysteme, deren Buntheit zwischen den beiden oben genannten Schichtsystemen liegt und die bei sich oben liegender Aluminiumschicht ebenfalls ohne das Auftreten von Schichthaftungsproblemen herstellen lassen.

Die Schichtdicken der beiden Absorberschichten und der Dielektrikumsschicht sind vorzugsweise so aufeinander abgestimmt, dass das Dünnschichtelement eine ausreichende Transmission entsprechend einer im CIELAB-Farbraum angegebenen Helligkeit $L^*$ zwischen 10% und 70%, bevorzugt zwischen 20% und 50% aufweist. Beim Einsatz von Silber als Absorbermaterial liegt die Schichtdicke der Silberschichten mit Vorteil zwischen 20 nm und 30 nm.

In einer vorteilhaften Erfindungsvariante ist der Interferenzschichtaufbau des Dünnschichtelements ein symmetrischer Dreischichtaufbau mit einer ersten Absorberschicht, einer dielektrischen Abstandsschicht und einer zweiten Absorberschicht, die aus demselben Material wie die erste Absorberschicht besteht und dieselbe Schichtdicke wie die erste Absorberschicht aufweist. Bei dem Interferenzschichtaufbau kann es sich hier insbesondere um ein Silber/Dielektrikum/Silber-Schichtsystem oder um ein Aluminium/ Dielektrium/ Aluminium-Schichtsystem handeln.

Bei einer alternativen, ebenfalls vorteilhaften Erfindungsvariante ist der Interferenzschichtaufbau ein asymmetrischer Dreischichtaufbau mit einer ersten Absorberschicht aus einem ersten Material, einer dielektrischen Abstandsschicht und einer zweiten Absorberschicht aus einem zweiten, unterschiedlichen Material. Insbesondere ist der Interferenzschichtaufbau in diesem Fall ein Silber/Dielektrikum/Aluminium-Schichtsystem.

Die dielektrische Abstandsschicht ist mit Vorteil aus $SiO_x$ oder $MgF_2$ gebildet. Die Schichtdicke der dielektrischen Abstandsschicht liegt typischerweise zwischen 90 nm und 400 nm. Da die Schichtdicke der dielektrischen Abstandsschicht maßgeblich den Farbeindruck des Dünnschichtelements bestimmt, wie weiter unten genauer dargestellt, wird sie je nach dem gewünschten Farbeindruck und der gewünschten Stärke des Farbkippeffekts gewählt.

In der Erfindung verscheint das Dünnschichtelement bei der Betrachtung im Auflicht metallisch glänzend und im Wesentlichen farbneutral und erscheint im Durchlicht farbig. Dabei weist das Dünnschichtelement im Durchlicht eine im CIELAB-Farbraum angegebene Chroma C*ab von mehr als 15, vorzugsweise von mehr als 20, besonders bevorzugt von mehr als 25 auf.

Bei einer Erfindungsvariante erscheint das Dünnschichtelement bei senkrechter Betrachtung im Durchlicht grün und weist eine Chroma $C^*_{ab}$ von mehr als 40 auf. Bei einer anderen Erfindungsvariante erscheint das Dünnschichtelement bei senkrechter Betrachtung im Durchlicht gelb und weist eine Chroma $C^*_{ab}$ von mehr als 20 auf. Bei einer weiteren Erfindungsvariante erscheint das Dünnschichtelement bei senkrechter Betrachtung im Durchlicht rot und weist eine Chroma $C^*_{ab}$ von mehr als 30 auf. Bei noch einer weiteren Erfindungsvariante erscheint das Dünnschichtelement bei senkrechter Betrachtung im Durchlicht blau und weist eine Chroma $C^*_{ab}$ von mehr als 30 auf.

In einer bevorzugten Variante der Erfindung erscheint das Dünnschichtelement im Durchlicht farbig und weist im Durchlicht einen Farbkippeffekt auf, bei dem sich der Farbeindruck im Durchlicht beim Kippen des Dünnschichtelements verändert. Der Farbeindruck im Durchlicht kann sich dabei beispielsweise von Magenta bei senkrechter Durchsicht zu Grün bei schräger Durchsicht ändern. In einer alternativen, ebenfalls vorteilhaften Erfindungsvariante erscheint das Dünnschichtelement im Durchlicht farbig und bleibt beim Kippen im Wesentlichen farbkonstant, allerdings mit einer veränderten Chroma $C^*_{ab}$ der Durchsichtsfarbe. Der Farbeindruck im Durchlicht kann dabei beispielsweise blau sein, wobei sich die Chroma der blauen Durchsichtsfarbe von einem hohen Wert bei senkrechter Durchsicht zu einem niedrigeren Wert bei schräger Durchsicht ändert. Beim Kippen des Dünnschichtelements ändert sich in dieser Variante nur die Sättigung der wahrgenommen Durchsichtsfarbe Blau.

Bei einer Weiterbildung der Erfindung ist das Dünnschichtelement mit einem Farbfilter, vorzugsweise einer farbigen Druckschicht oder einer farbigen Aufdampfschicht kombiniert. Das Dünnschichtelement und das Farbfilter können dabei so aufeinander abgestimmt sein, dass das Dünnschichtelement und das Farbfilter bei einer vorbestimmten Betrachtungsrichtung im Wesentlichen nur in jeweils unterschiedlichen, nicht überlappenden Wellenlängenbereichen transmittieren. Die Kombination aus Dünnschichtelement und Farbfilter erscheint bei dieser Betrachtungsrichtung dann schwarz, da keine Farbe von beiden Elementen zugleich transmittiert wird. Bei anderen Betrachtungsrichtungen verschiebt sich der Wellenlängenbereich, in dem das Dünnschichtelement transmittiert, so, dass dieser mit dem Wellenlängenbereich, in dem der Farbfilter transmittiert, überlappt. Folglich wird ein gewisser Anteil des Lichts von beiden Elementen transmittiert. Auf diese Weise können Durchsichtssicherheitselemente geschaffen werden, die ein Kippen aus Schwarz bzw. in Schwarz zeigen und die für den Betrachter oft besonders frappierend wirken.

In vorteilhaften Gestaltungen liegt das Dünnschichtelement in Form von Mustern, Zeichen oder einer Codierung vor. Diese schließt auch die Möglichkeit ein, dass ein vollflächiges Dünnschichtelement mit Aussparungen in Form von Mustern, Zeichen oder einer Codierung versehen ist.

Das erfindungsgemäße Dünnschichtelement kann mit Vorteil mit einer Reliefstruktur, wie etwa einer diffraktiven Reliefstruktur (z.B. Hologramm), einer mikrooptischen Reliefstruktur (z.B. Mikrolinsenstruktur, 3D-Darstellung aus Sägezahnstrukturen) oder einer Sublambda-Struktur (z.B. Subwellenlängengitter, Mottenaugenstrukturen) kombiniert sein und kann insbesondere auf eine derartige Reliefstruktur aufgebracht sein. Dadurch lassen sich die optisch variablen Effekte der genannten Reliefstrukturen mit dem beschriebenen auffälligen Transmissions-Farbeffekt und gegebenenfalls dem auffälligen Transmissions-Farbkippeffekt kombinieren.

Das erfindungsgemäße Dünnschichtelement kann auch mit anderen optisch variablen Beschichtungen kombiniert werden, insbesondere mit Beschichtungen, die selbst eine Kombination von farbvariablen und farbkonstanten Bereichen aufweisen.

Die Erfindung umfasst auch ein Durchsichtssicherheitselement für Sicherheitspapiere, Wertdokumente und dergleichen, mit einem Träger und einem auf dem Träger aufgebrachten Dünnschichtelement der beschriebenen Art. Das Dünnschichtelement ist dabei mit Vorteil in Form eines Motivs auf den Träger aufgebracht. In einer vorteilhaften Ausgestaltung ist das Dünnschichtelement auf seiner dem Träger gegenüberliegenden Oberseite zudem mit einer Druckannahmeschicht versehen. Vorzugsweise handelt es sich bei der Druckannahmeschicht um Deckweiß.

Im letzteren Fall kann das Dünnschichtelement beispielsweise in ein Sicherheitspapier oder einen anderen Datenträger eingebettet werden und dort ein farbiges, wasserzeichenartiges Element bilden. Das Dünnschichtelement wird dazu zumindest bereichsweise, insbesondere in Form eines Motivs, auf einen Folienstreifen aufgebracht. Im Fall einer Verbundbanknote wird dieser dann auf das Papier geklebt und auf der Oberseite mit einer weißen Druckannahmeschicht bedruckt, so dass der Bereich mit dem Dünnschichtelement in Aufsicht praktisch nicht zu erkennen ist. In Durchsicht tritt das Dünnschichtelement dann aber trotzdem farbig hervor. Es hat sich überraschend herausgestellt, dass insbesondere in Durchsicht grün erscheinende Dünnschichtelemente auch durch eine Papierschicht typischer Dicke in Transmission noch deutlich farbig zu erkennen sind und wegen unterschiedlichen visuellen Eindrucks im Auflicht und Durchlicht wasserzeichenartige und zudem farbige Elemente bilden.

Mit besonderem Vorteil befindet sich auf dem gleichen Folienstreifen in einem anderen Bereich ein weiteres Durchsichtsicherheitselement für ein Fenster, so dass das Fensterelement und das farbige, wasserzeichenartige Element in den gleichen Arbeitsgängen hergestellt werden können.

Weiter enthält die Erfindung optisch variable Farbpigmente für eine Druckfarbe, die durch Dünnschichtelemente der beschriebenen Art gebildet sind.

Die Erfindung enthält schließlich auch einen Datenträger mit einem Dünnschichtelement oder einem Durchsichtssicherheitselement der beschriebenen Art, wobei das Dünnschichtelement oder das Durchsichtssicherheitselement insbesondere in oder über einem transparenten Fensterbereich oder einer durchgehenden Öffnung des Datenträgers angeordnet ist. Die Erfindung enthält auch einen Datenträger mit einem Dünnschichtelement oder einem Durchsichtssicherheitselement der beschriebenen Art, bei dem das Dünnschichtelement oder das Durchsichtssicherheitselement in den Datenträger eingebettet ist. Insbesondere kann der Datenträger ein Papiersubstrat enthalten, in den das Dünnschichtelement oder das Durchsichtssicherheitselement eingebettet ist.

Bei dem Datenträger kann es sich insbesondere um ein Wertdokument, wie eine Banknote, insbesondere eine Papierbanknote, eine Polymerbanknote oder eine Folienverbundbanknote handeln, oder um eine Ausweiskarte , wie etwa eine Kreditkarte, Bankkarte, Barzahlungskarte, Berechtigungskarte, einen Personalausweis oder eine Passpersonalisierungsseite handeln.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen. Die verschiedenen Ausführungsbeispiele sind nicht auf die Verwendung in der konkret beschriebenen Form beschränkt, sondern können auch untereinander kombiniert werden.

Es zeigen:

Fig. 1     eine schematische Darstellung einer Banknote mit einem erfindungsgemäßen Durchsichtssicherheitselement,

Fig. 2     das Durchsichtssicherheitselement der Fig. 1 entlang der Linie II-II im Querschnitt,

Fig. 3     den Verlauf des Realteils n (durchgezogen) und des Imaginärteils k (gestrichelt) der komplexen Brechzahl $N = n + ik$ im sichtbaren Spektralbereich, in (a) für Chrom und in (b) für Silber,

Fig. 4     Transmissionsspektren von symmetrischen Absorber/Dielektrikum/Absorber-Aufbauten, jeweils bei senkrechter Betrachtung (durchgezogen) und bei schräger Betrachtung (gestrichelt), in (a) für Chrom und in (b) für Silber,

Fig. 5     die berechneten Farborte der Transmission für ein herkömmliches Chrom/Dielektrikum/Chrom-Schichtsystem (gestrichelt) und ein erfindungsgemäßes Silber/Dielektrikum/Silber-Schichtsystem (durchgezogen) in einem $a*b*$-Koordinatensystem,

Fig. 6     die berechneten Farborte der Transmission für zwei erfindungsgemäße Silber/Dielektrikum/Silber- Schichtsysteme bei senkrechter und schräger Betrachtung in einem $a*b*$-Koordinatensystem,

Fig. 7     ein Durchsichtssicherheitselement nach einem Ausführungsbeispiel der Erfindung, bei dem das Dünnschichtelement mit einer Hologrammprägestruktur kombiniert ist, und

Fig. 8     eine Druckfarbe mit optisch variablen Farbpigmenten nach einem Ausführungsbeispiel der Erfindung.

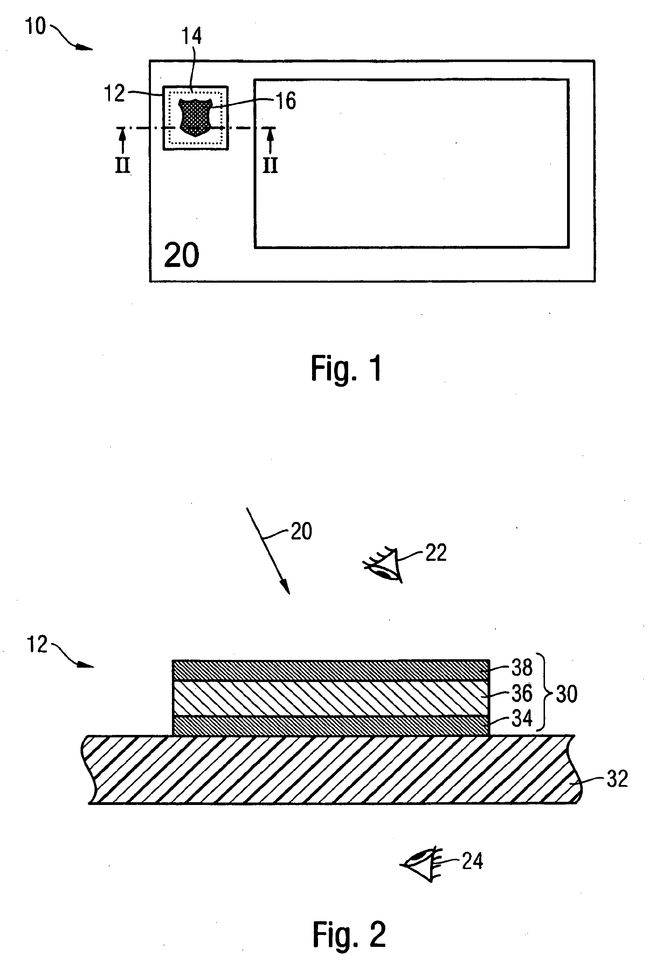

Die Erfindung wird nun am Beispiel von Sicherheitselementen für Banknoten erläutert. Fig. 1 zeigt dazu eine schematische Darstellung einer Banknote 10 mit einer durchgehenden Öffnung 14, die mit einem erfindungsgemäßen Durchsichtssicherheitselement 12 abgedeckt ist. Fig. 2 zeigt das Durchsichtssicherheitselement 12 entlang der Linie II-II von Fig. 1 im Querschnitt.

Das Durchsichtssicherheitselement 12 enthält ein Motiv 16, das in Fig.1 zur Illustration als Wappenmotiv 16 dargestellt ist. In anderen Gestaltungen kann das Motiv 16 jedoch beliebige Muster, Zeichen oder Codierungen, insbesondere auch eine alphanumerische Zeichenfolge, wie etwa die Denomination der Banknote 10, darstellen. Bei einer Betrachtung des Durchsichtssicherheitselements im Auflicht, bei der sich der Betrachter 22 auf derselben Seite wie das einfallende Licht 20 befindet, erzeugt das Motiv 16 einen metallisch glänzenden und im Wesentlichen farblosen visuellen Eindruck.

Wird das Durchsichtssicherheitselement 12 dagegen im Durchlicht betrachtet (Betrachtungsposition 24), etwa indem die Banknote 10 vor eine Lichtquelle oder gegen das Tageslicht gehalten wird, so erscheint das Motiv 16 für den Betrachter 24 mit kräftigen, satten Farben, die sich zudem mit dem Kippwinkel der Banknote 10 verändern. Beispielsweise erscheint das Motiv 16 bei senkrechter Durchsicht mit einem kräftigen grünen Farbton, der beim Kippen der Banknote in ein sattes Blau bei schräger Durchsicht übergeht.

Der satte und kräftige Farbeindruck in Durchsicht eines im Auflicht metallisch und farblos erscheinenden Sicherheitselements widerspricht den üblichen Sehgewohnheiten und hat daher einen hohen Aufmerksamkeits- und Wiedererkennungswert. Dieser wird durch die Farbveränderung beim Kippen der Banknote 10 noch gesteigert, zumal die Farbveränderung aufgrund der satten Farben sehr auffällig ist.

Um die genannten Farbeffekte zu erzeugen, enthält das Durchsichtssicherheitselement 12 mit Bezug auf Fig. 2 eine transparente Kunststofffolie 32, auf die ein dreischichtiges, symmetrisches Dünnschichtelement 30 mit Interferenzschichtaufbau in Form des gewünschten Motivs 16 aufgebracht ist. Das Dünnschichtelement 30 besteht aus einer ersten semitransparenten Absorberschicht 34, die im Ausführungsbeispiel durch eine 25 nm dicke Silberschicht gebildet ist, einer dielektrischen Abstandsschicht 36, die im Ausführungsbeispiel durch eine 270 nm dicke $SiO_2$-Schicht gebildet ist, und einer zweiten semitransparenten Absorberschicht 38, die im Ausführungsbeispiel durch eine weitere 25 nm dicke Silberschicht gebildet ist.

Die Besonderheit des erfindungsgemäßen Schichtaufbaus besteht darin, dass für die beiden semitransparenten Absorberschichten 34, 38 ein Material eingesetzt wird, bei dessen komplexer Brechzahl N = n + ik sich der Realteil n und der Imaginärteil k zumindest in einem Teil des sichtbaren Spektralbereichs signifikant, nämlich um mehr als einen Faktor 5, unterscheiden. Dagegen sind bei den herkömmlich verwendeten Materialien für Absorberschichten von Dünnschichtelementen, wie etwa Chrom, Nickel oder Palladium, die Werte für den Realteil n und den Imaginärteil k der komplexen Brechzahl N stets von der gleichen Größenordnung.

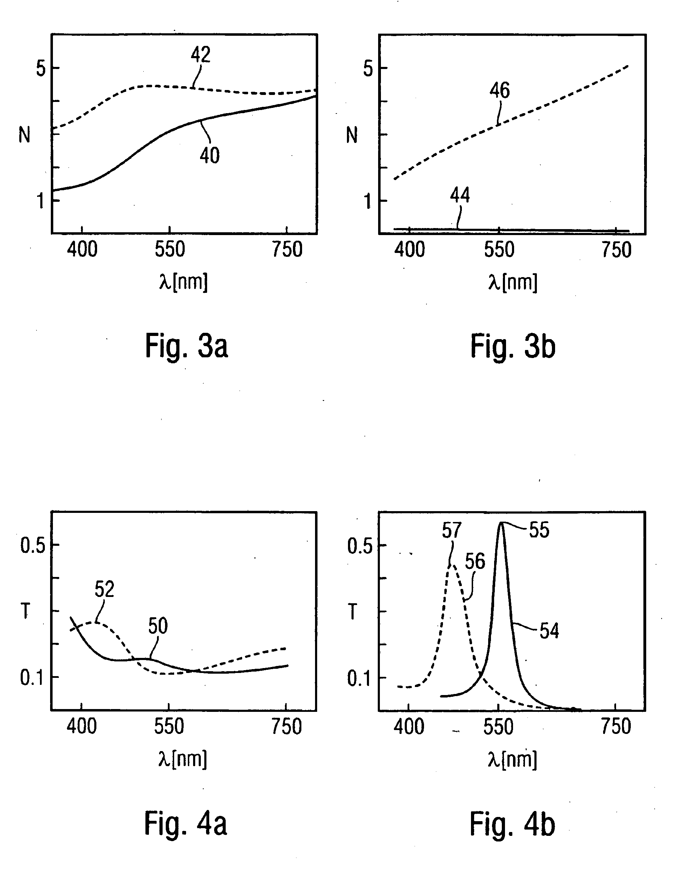

Diese unterschiedlichen Eigenschaften sind in Fig. 3 illustriert, wo jeweils der Verlauf des Realteils n und des Imaginärteils k der komplexen Brechzahl N als Funktion der Wellenlänge gezeigt ist, in Fig. 3(a) für Chrom und in Fig. 3(b) für Silber. Wie aus Fig. 3(a) zu erkennen, sind bei Chrom die Werte von n (Kurve 40, durchgezogen) und k (Kurve 42, gestrichelt) im gesamten sichtbaren Spektralbereich von derselben Größenordnung und unterscheiden sich nirgends um mehr als etwa einen Faktor 2,5. Dagegen zeigen die entsprechenden Kurven für n und k von Silber der Fig. 3(b), dass der Imaginärteil k (Kurve 46, gestrichelt) von Silber im sichtbaren Spektralbereich etwa 10 bis 30 mal so groß ist wie der Realteil n (Kurve 44, durchgezogen).

Die gegenwärtigen Erfinder haben nun gefunden, dass dieser große Unterschied in den Werten von n und k beim Einsatz dieser Materialien als Absorberschichten von Interferenzschichtelementen überraschend eine starke Farbigkeit der Transmission erzeugt. Gleichzeitig bleibt die Reflexion im Wesentlichen farblos und erscheint daher dem Betrachter farbneutral. Dieses Verhalten ist in Fig. 4 illustriert, wo die Transmissionsspektren von symmetrischen Absorber/Dielektrikum/Absorber-Aufbauten, jeweils bei senkrechter Betrachtung und bei schräger Betrachtung gezeigt sind.

Fig. 4(a) zeigt zunächst die Transmission eines herkömmlichen symmetrischen Chrom/Dielektrikum/Chrom-Aufbaus bei senkrechter Betrachtung (Kurve 50, durchgezogen) und bei schräger Betrachtung (Kurve 52, gestrichelt). Die Schichtdicken im Aufbau betragen vorzugsweise 300 nm für die Dielektrikumsschicht und 8 nm für die Chromschichten. In beiden Fällen verlaufen die Transmissionsspektren im Wesentlichen flach, so dass das transmittierte Licht kaum Farbsättigung aufweist und daher gräulich erscheint. Entsprechend sind Durchsichtssicherheitselemente auf Basis eines Chrom/ Dielektrikum/Chrom-Dünnschichtelements optisch wenig auffällig.

Dagegen zeigen (Fig.4(b)) die Transmissionsspektren eines symmetrischen Silber/ Dielektrikum/Silber-Aufbaus sowohl bei senkrechter Betrachtung (Kurve 54, durchgezogen) als auch bei schräger Betrachtung (Kurve 56, gestrichelt) deutlich ausgeprägte Maxima 55 bzw. 57, und damit eine starke Farbigkeit des transmittierten Lichts. Die Schichtdicken im Aufbau betragen vorzugsweise 300 nm für die Dielektrikumsschicht und 25 nm für die Silberschichten.

Bei senkrechter Betrachtung (Kurve 54) liegt das Maximum 55 bei etwa 560 nm an der Grenze zwischen Gelb und Grün. Kippt der Betrachter das Durchsichtssicherheitselement, so verschiebt sich das Transmissionsmaximum in den kurzwelligen Bereich. Bei schräger Betrachtung unter 60° (Kurve 56) liegt das Maximum 57 zwischen 450 nm und 500 nm und zeigt dort ein sattes Blau. Aufgrund der kräftigen Farben und der deutlichen Änderung des Farbtons ist auch der Durchsichts-Farbkippeffekt für den Betrachter sehr auffällig und einprägsam.

Eine genauere Charakterisierung der Farbigkeit der Transmission kann im CIELAB-Farbraum durch die Angabe der Chroma der Durchsichtsfarbe erfolgen. Im CIELAB-Farbraum wird jede Farbe durch drei Koordinaten L*, a* und b* beschrieben, wobei die Größe L* der Helligkeit entspricht und Werte von 0 bis 100 annehmen kann. Die a*-Achse beschreibt den Grün- oder Rotanteil einer Farbe, wobei negative Werte von a* für Grün und positive Werte für Rot stehen. Die b*-Achse beschreibt den Blau- oder Gelbanteil einer Farbe, wobei negative Werte von b* für Blau und positive Werte für Gelb stehen. Die Skalen der a*-Achse und der b*-Achse umfassen einen Zahlenbereich von -150 bis +100 bzw. von -100 bis +150, wobei allerdings nicht allen Kombinationen eine wahrnehmbare Farbe entspricht.

Um anzugeben, wie kräftig oder brillant eine Farbe ist, wird die Chroma verwendet, die durch

$$C_{ab}^* = \sqrt{(a^*)^2 + (b^*)^2}$$

also den Abstand eines Farborts (a*, b*) vom Nullpunkt (0,0) gegeben ist. Je größer die Chroma, desto kräftiger oder brillanter erscheint die jeweilige Farbe. Bei einer Chroma von 0 ergibt sich je nach Helligkeit ein schwarzer, grauer, oder weißer Farbeindruck.

Der Farbton einer Farbe kann durch den Farbwinkel angegeben werden, der durch

$$h_{ab}^o = \arctan \frac{b^*}{a^*}$$

gegeben ist. Eine blasse und eine kräftige Farbe eines bestimmten Farbtons haben den gleichen Farbwinkel, aber unterschiedliche Chroma.

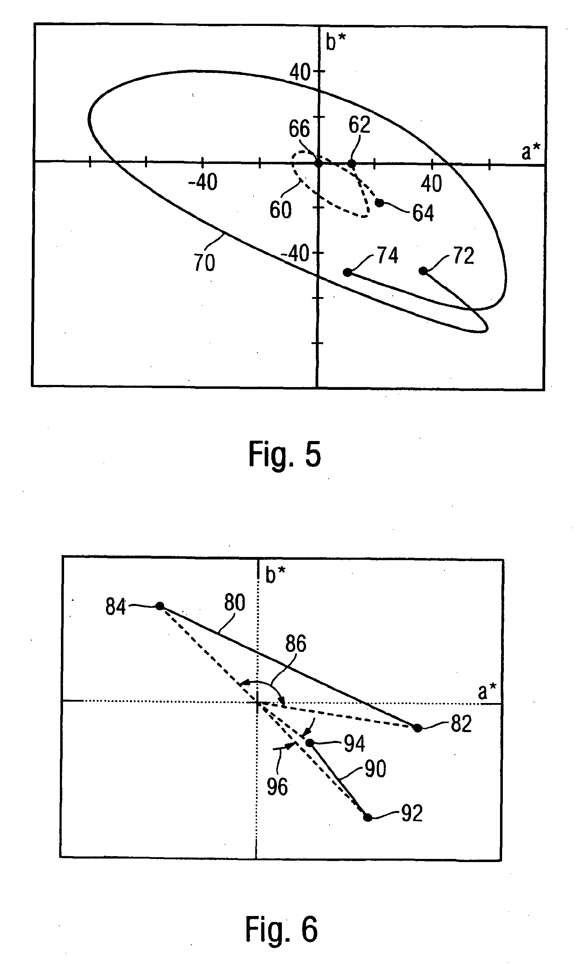

Fig. 5 zeigt nun schematisch die berechneten Farborte (a*, b*) der Transmission für ein herkömmliches Chrom/Dielektrikum/Chrom-Schichtsystem (Kurve 60, gestrichelt) und ein erfindungsgemäßes Silber/Dielektrikum/ Silber-Schichtsystem (Kurve 70, durchgezogen) in einem a*b*-Koordinatensystem. Durch die Kurven 60, 70 sind die Farborte jeweils für eine Vielzahl von Schichtdicken des Dielektrikums (SiO$_2$) zwischen d = 200 nm (jeweils am Anfangspunkt 62 bzw. 72) und d = 400 nm (jeweils am Endpunkt 64 bzw. 74) angegeben. Die Farbe des transmittierten Lichts hängt dabei nicht nur von dem Schichtsystem, sondern auch von der verwendeten Lichtquelle ab. Für die Berechnung der Fig. 5 wurde die üblicherweise in Europa benutzte Normlichtquelle D65 zugrunde gelegt, die einer Farbtemperatur von 6500 K entspricht.

Für jeden Farbort (a*, b*) ist die Chroma C*$_{ab}$ in dem Diagramm der Fig. 5 nach der oben genannten Beziehung durch den Abstand des Farborts (a*, b*) zum Nullpunkt 66 des Koordinatensystems gegeben.

Wie aus Fig. 5 unmittelbar ersichtlich, werden sowohl mit erfindungsgemäßen Silber/Dielektrikum/Silber-Schichtsystemen (Kurve 70) als auch mit herkömmlichen Chrom/Dielektrikum/Chrom-Schichtsystemen (Kurve 60) im gezeigten Schichtdickenbereich der Dielektrikumsschicht alle Farbwinkel erfasst. Ein wesentlicher Unterschied zwischen den erfindungsgemäßen und den herkömmlichen Schichtsystemen besteht jedoch in der Chroma, also dem Abstand der Farborte vom Nullpunkt 66, der bei den erfindungsgemäßen Schichtsystemen (Kurve 70) im Vergleich mit den herkömmlichen Schichtsystemen (Kurve 60) außerordentlich hoch ist.

Dabei ist die Chroma erfindungsgemäßer Silber/Dielektrikum/Silber-Schichtsysteme in der Regel sogar um ein Vielfaches größer als die Chroma herkömmlicher Chrom/ Dielektrikum/ Chrom-Schichtsysteme. Beispielsweise beträgt die Chroma eines Silber/Dielektrikum/Silber-Systems bei Transmission im Grünen (-a*-Achse) etwa C*$_{ab}$ = 70, während die Chroma eines Chrom/Dielektrikum/Chrom-Systems beim selben Farbton nur etwa C*$_{ab}$ = 10 beträgt. Bei Transmission im Gelben (+b*-Achse) steht einem Chromawert C*$_{ab}$ = 33 für das Silber/Dielektrikum/Silber-System ein Chromawert von G*$_{ab}$ = 4 für das Chrom/ Dielektrikum/Chrom-System gegenüber. Ähnlich sind die Verhältnisse für Rot (+a*-Achse), Blau (-b*-Achse) und die Mischfarben von Rot, Blau, Gelb und Grün.

Die Gesamthelligkeit L*, also der über den sichtbaren Spektralbereich gewichtete gemittelte Transmissionsgrad der Schichtsysteme, ist bei den gewählten Schichtdicken für die Silberschichten (25 nm) und die Chromschichten (8 nm) vergleichbar und liegt jeweils zwischen etwa 20 und etwa 50%.

Die gegenwärtigen Erfinder haben weiter überraschend gefunden, dass sich durch eine geeignete Wahl der Schichtdicke der Dielektrikumsschicht sowohl Dünnschichtelemente erzeugen lassen, die in Transmission eine hohe Farbigkeit und einen starken Farbkippeffekt zeigen, als auch Dünnschichtelemente, die in Transmission zwar eine hohe Farbigkeit zeigen, ihre Farbe beim Verkippen jedoch kaum ändern.

Im letzteren Fall können besonders leicht verständliche Durchsichtssicherheitselemente geschaffen werden, die zwar einen auffälligen Kontrast zwischen ihrem Erscheinungsbild in Aufsicht (metallisch und im Wesentlichen farblos) und in Durchsicht (starke, gesättigte Farben) zeigen, die jedoch ihre Durchsichtsfarbe beim Kippen des Sicherheitselements praktisch nicht verändern.

Beide Erfindungsvarianten sind in Fig. 6 illustriert, die für zwei erfindungsgemäße Silber/Dielektrikum/Silber-Schichtsysteme die berechneten Farborte der Transmission in einem a*b* -Koordinatensystem zeigt.

Das erste Schichtsystem weist zwei 25 nm dicke Silberschichten auf, zwischen denen als Dielektrikumsschicht eine 340 nm dicke SiO$_2$-Schicht angeordnet ist. Bei dieser Variante liegt der Farbort der Transmission des Schichtsystems bei senkrechter Betrachtung 82 bei Rot und bei schräger Betrachtung 84 bei Gelb. Wie in Fig. 6 ersichtlich, schließen die beiden Farborte 82, 84 einen sehr großen Farbwinkel 86 ein, so dass das erste Schichtsystem beim Kippen einen ausgeprägten Farbkippeffekt von Rot zu Gelb, etwa entlang der Linie 80 zeigt.

Das zweite Schichtsystem weist zwei 25 nm dicke Silberschichten auf, zwischen denen als Dielektrikumsschicht eine 200 nm dicke $SiO_2$-Schicht angeordnet ist. Bei dieser Variante liegt der Farbort der Transmission des Schichtsystems sowohl bei senkrechter Betrachtung 92 als auch bei schräger Betrachtung 94 im Blauen. Die beiden Farborte 92, 94 schließen nur einen sehr kleinen Farbwinkel 96 ein, so dass der Farbeindruck des zweiten Schichtsystems beim Kippen fast unverändert bleibt. In dieser Erfindungsvariante verändert das Kippen des Schichtsystems in Durchsicht nicht den Farbort, sondern verändert nur etwa entlang der Linie 90 die Chroma der wahrgenommenen Durchsichtsfarbe Blau, was dem flüchtigen Betrachter "auf der Straße" jedoch kaum auffallen wird.

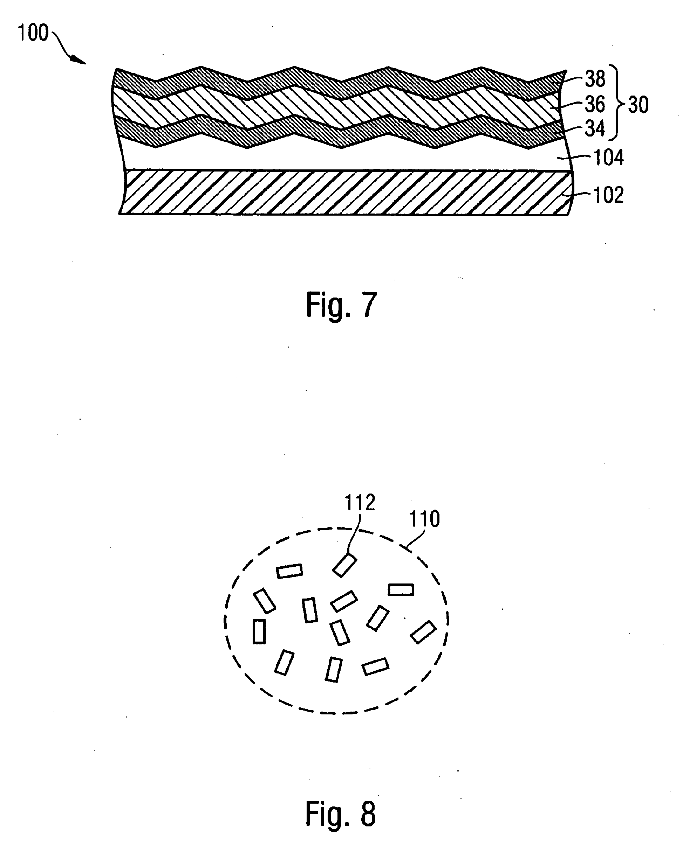

Das Ausführungsbeispiel der Fig. 7 zeigt ein Durchsichtssicherheitselement 100, bei dem ein erfindungsgemäßes Dünnschichtelement mit einer Hologrammprägestruktur kombiniert ist.

Dazu wurde auf ein transparentes Foliensubstrat 102 zunächst eine transparente Prägelackschicht 104 mit der gewünschten Hologramm-Prägestruktur aufgebracht. Nach dem Aufbringen einer nicht dargestellten Primerschicht wurde dann ein Dünnschichtelement mit Interferenzschichtaufbau, etwa ein Dünnschichtelement 30 der bei Fig. 2 beschriebenen Art, auf die Prägestruktur aufgedampft. Auf diese Weise lassen sich die optisch variablen Effekte der Hologramm-Prägestruktur mit dem oben beschriebenen auffälligen Transmissions-Farbeffekt kombinieren. Beispielsweise kann das Dünnschichtelement in dem Fenster einer Banknote in Form einer vor- oder zurückgewölbten Zahl oder eines vor- oder zurückgewölbten Symbols erscheinen.

Die beschriebenen Dünnschichtelemente können zur auch Herstellung von Druckfarben mit optisch variablen Farbpigmenten genutzt werden. Eine solche Druckfarbe ist in Fig. 8 schematisch dargestellt. Zur Herstellung der Druckfarbe 110 wird auf eine Trägerfolie zunächst ein großflächiges Dünnschichtelement der oben beschriebenen Art aufgebracht. Das Dünnschichtelement wird von der Trägerfolie mechanisch abgeschabt und die abgeschabten Flocken bei Bedarf auf eine gewünschte Partikelgröße gemahlen. Die entstehenden Interferenzschicht-Partikel werden dann als optisch variable Farbpigmente 112 in ein Bindemittel der Druckfarbe 110 eingebracht. Auf diese Weise lässt sich einfach und kostengünstig eine Vielzahl unterschiedlicher Pigmente mit optisch ansprechendem Farbeindruck herstellen.

## Patentansprüche

1. Dünnschichtelement mit Interferenzschichtaufbau für Sicherheitspapiere, Wertdokumente und dergleichen, mit zumindest zwei semitransparenten Absorberschichten und zumindest einer zwischen den zumindest zwei Absorberschichten angeordneten dielektrischen Abstandsschicht, bei dem

   - die beiden Absorberschichten jeweils aus einem Material mit einer komplexen Brechzahl N gebildet sind, deren Realteil n und Imaginärteil k sich zumindest in einem Teil des sichtbaren Spektralbereichs um einen Faktor 5 oder mehr unterscheiden, **dadurch gekennzeichnet, dass**
   - das Dünnschichtelement bei der Betrachtung im Auflicht metallisch glänzend und im Wesentlichen farbneutral und im Durchlicht farbig erscheint, wobei das Dünnschichtelement im Durchlicht eine im CIELAB-Farbraum angegebene Chroma $C^*_{ab}$ von mehr als 15 aufweist, und dass bei senkrechter Betrachtung
   - im Durchlicht Grün erscheint und eine Chroma $C^*_{ab}$ von mehr als 40 aufweist, oder
   - im Durchlicht Gelb erscheint und vorzugsweise eine Chroma $C^*_{ab}$ von mehr als 20 aufweist, oder
   - im Durchlicht Rot erscheint und eine Chroma $C^*_{ab}$ von mehr als 30 aufweist, oder
   - im Durchlicht Blau erscheint und eine Chroma $C^*_{ab}$ von mehr als 30 aufweist.

2. Dünnschichtelement nach Anspruch 1, **dadurch gekennzeichnet, dass** die beiden Absorberschichten aus unterschiedlichen Materialien gebildet sind, wobei sich der Realteil n1 und Imaginärteil k1 des Materials einer der beiden Absorberschichten zumindest in einem Teil des sichtbaren Spektralbereichs um einen Faktor 5 oder mehr unterscheiden, und sich der Realteil n2 und Imaginärteil k2 des Materials der anderen der beiden Absorberschichten um einen Faktor 8 oder mehr, vorzugsweise um einen Faktor 10 oder mehr, besonders bevorzugt um einen Faktor 15 oder mehr unterscheiden.

3. Dünnschichtelement nach Anspruch 1 oder 2, **dadurch gekennzeichnet, dass** sich der Realteil n und Imaginärteil k der Materialien beider Absorberschichten zumindest in einem Teil des sichtbaren Spektralbereichs um einen Faktor 8 oder mehr, vorzugsweise um einen Faktor 10 oder mehr, besonders bevorzugt um einen Faktor 15 oder mehr unterscheiden.

4. Dünnschichtelement nach Anspruch 1 oder 2, **dadurch gekennzeichnet, dass** sich der Realteil n und Imaginärteil k des Materials zumindest einer der beiden Absorberschichten im gesamten sichtbaren Spektralbereich um einen Faktor 5 oder mehr, um einen Faktor 8 oder mehr, um einen Faktor 10 oder mehr oder um einen Faktor 15 oder mehr unterscheiden.

5. Dünnschichtelement nach wenigstens einem der Ansprüche 1 bis 4, **dadurch gekennzeichnet, dass** eine der Absorberschichten oder beide Absorberschichten aus Silber gebildet sind.

6. Dünnschichtelement nach wenigstens einem der Ansprüche 1 bis 5, **dadurch gekennzeichnet, dass** eine der Absorberschichten oder beide Absorberschichten aus Aluminium gebildet sind.

7. Dünnschichtelement nach wenigstens einem der Ansprüche 1 bis 6, **dadurch gekennzeichnet, dass** der Interferenzschichtaufbau ein symmetrischer Dreischichtaufbau mit einer ersten Absorberschicht, einer dielektrischen Abstandsschicht und einer zweiten Absorberschicht ist.

8. Dünnschichtelement nach wenigstens einem der Ansprüche 1 bis 6, **dadurch gekennzeichnet, dass** der Interferenzschichtaufbau ein asymmetrischer Dreischichtaufbau mit einer ersten Absorberschicht aus einem ersten Material, einer dielektrischen Abstandsschicht und einer zweiten Absorberschicht aus einem zweiten, unterschiedlichen Material ist.

9. Dünnschichtelement nach wenigstens einem der Ansprüche 1 bis 8, **dadurch gekennzeichnet, dass** die dielektrische Abstandsschicht aus $SiO_x$ oder $MgF_2$ gebildet ist.

10. Dünnschichtelement nach wenigstens einem der Ansprüche 1 bis 9, **dadurch gekennzeichnet, dass** das Dünnschichtelement im Durchlicht eine im CIELAB-Farbraum angegebene Chroma $C^*_{ab}$ von mehr als 20, vorzugsweise von mehr als 25 aufweist.

11. Dünnschichtelement nach wenigstens einem der Ansprüche 1 bis 10, **dadurch gekennzeichnet, dass** das Dünnschichtelement im Durchlicht farbig erscheint und einen Farbkippeffekt aufweist.

12. Dünnschichtelement nach wenigstens einem der Ansprüche 1 bis 10, **dadurch gekennzeichnet, dass** das Dünnschichtelement im Durchlicht farbig erscheint und beim Kippen im Wesentlichen farbkonstant mit einer veränderten Chroma $C^*_{ab}$ ist.

13. Dünnschichtelement nach wenigstens einem der Ansprüche 1 bis 12, **dadurch gekennzeichnet, dass** das Dünnschichtelement mit einem Farbfilter, vorzugsweise einer farbigen Druckschicht oder einer farbigen Aufdampfschicht kombiniert ist.

14. Dünnschichtelement nach Anspruch 13, **dadurch gekennzeichnet, dass** das Dünnschichtelement und das Farbfilter bei einer vorbestimmten Betrachtungsrichtung nur in jeweils unterschiedlichen, nicht überlappenden Wellenlängenbereichen transmittieren.

15. Dünnschichtelement nach wenigstens einem der Ansprüche 1 bis 14, **dadurch gekennzeichnet, dass** das Dünnschichtelement in Form von Mustern, Zeichen oder einer Kodierung vorliegt.

16. Dünnschichtelement nach wenigstens einem der Ansprüche 1 bis 15, **dadurch gekennzeichnet, dass** das Dünnschichtelement mit einer Reliefstruktur kombiniert ist, insbesondere auf einer diffraktiven Reliefstruktur oder einer mikrooptischen Reliefstruktur aufgebracht ist.

17. Durchsichtssicherheitselement für Sicherheitspapiere, Wertdokumente und dergleichen, mit einem Träger und einem auf dem Träger aufgebrachten Dünnschichtelement nach einem der Ansprüche 1 bis 16.

18. Durchsichtssicherheitselement nach Anspruch 17, **dadurch gekennzeichnet, dass** das Dünnschichtelement in Form eines Motivs auf den Träger aufgebracht ist.

19. Durchsichtssicherheitselement nach Anspruch 17 oder 18, **dadurch gekennzeichnet, dass** das Dünnschichtelement auf seiner dem Träger gegenüberliegenden Oberseite mit einer Druckannahmeschicht versehen ist.

20. Optisch variable Farbpigmente für eine Druckfarbe, die durch Dünnschichtelemente nach einem der Ansprüche 1 bis 16 gebildet sind.

21. Datenträger mit einem Dünnschichtelement nach einem der Ansprüche 1 bis 16 oder einem Durchsichtssicherheitselement nach einem der Ansprüche 17 bis 19, bei dem das Dünnschichtelement oder das Durchsichtssicherheitselement in oder über einem transparenten Fensterbereich oder einer durchgehenden Öffnung des Datenträgers angeordnet ist.

22. Datenträger mit einem Dünnschichtelement nach einem der Ansprüche 1 bis 16 oder einem Durchsichtssicherheitselement nach einem der Ansprüche 17 bis 19, bei dem das Dünnschichtelement oder das Durchsichtssicherheitselement in den Datenträger eingebettet ist, insbesondere dass der Datenträger ein Papiersubstrat enthält, in den das Dünnschichtelement oder das Durchsichtssicherheitselement eingebettet ist.

23. Datenträger nach Anspruch 21 oder 22, **dadurch gekennzeichnet, dass** der Datenträger ein Wertdokument, wie eine Banknote, insbesondere eine Papierbanknote, eine Polymerbanknote, eine Folienverbundbanknote oder Ausweiskarte ist.

## Claims

1. A thin-film element having an interference layer structure for security papers, value documents and the like, having at least two semitransparent absorber layers and at least one dielectric spacing layer arranged between the at least two absorber layers, in which

    - the two absorber layers are each formed from a material having a complex refractive index N whose real part n and imaginary part k differ at least in a portion of the visible spectral range by a factor of 5 or more,

    **characterized in that**

    - the thin-film element appears shiny metallic and substantially color neutral when viewed in reflected light and colored in transmitted light, the thin-film element exhibiting a chroma $C^*_{ab}$, specified in the CIELAB color space, of more than 15 in transmitted light

    and that when viewed vertically,

    - appears green in transmitted light and exhibits a chroma $C^*_{ab}$ of more than 30, preferably of more than 40, or
    - appears yellow in transmitted light and preferably exhibits a chroma $C^*_{ab}$ of more than 20, or
    - appears red in transmitted light and exhibits a chroma $C^*_{ab}$ of more than 20, preferably of more than 30, or
    - appears blue in transmitted light and exhibits a chroma $C^*_{ab}$ of more than 20, preferably of more than 30.

2. The thin-film element according to claim 1, **characterized in that** the two absorber layers are formed from different materials, the real part n1 and imaginary part k1 of the material of one of the two absorber layers differing at least in a portion of the visible spectral range by a factor of 5 or more, and the real part n2 and imaginary part k2 of the material of the other of the two absorber layers differing by a factor of 8 or more, preferably by a factor of 10 or more, particularly preferably by a factor of 15 or more.

3. The thin-film element according to claim 1 or 2, **characterized in that** the real part n and imaginary part k of the materials of both absorber layers differ at least in a portion of the visible spectral range by a factor of 8 or more, preferably by a factor of 10 or more, particularly preferably by a factor of 15 or more.

4. The thin-film element according to claim 1 or 2, **characterized in that** the real part n and imaginary part k of the material of at least one of the two absorber layers differ in the entire visible spectral range by a factor of 5 or more, by a factor of 8 or more, by a factor of 10 or more or by a factor of 15 or more.

5. The thin-film element according to claim 1 to 4, **characterized in that** one of the absorber layers or both absorber layers are formed from silver.

6. The thin-film element according to claim 1 to 5, **characterized in that** one of the absorber layers or both absorber layers are formed from aluminum.

7. The thin-film element according to claim 1 to 6, **characterized in that** the interference layer structure is a symmetrical three-layer structure having a first absorber layer, a dielectric spacing layer and a second absorber layer.

8. The thin-film element according to claim 1 to 6, **characterized in that** the interference layer structure is an asymmetrical three-layer structure having a first absorber layer composed of a first material, a dielectric spacing layer, and a second absorber layer composed of a second, different material.

9. The thin-film element according to claim 1 to 8, **characterized in that** the dielectric spacing layer is formed from $SiO_x$ or $MgF_2$.

10. The thin-film element according to claim 1 to 9, **characterized in that**, in transmitted light, the thin-film element exhibits, specified in the CIELAB color space, a chroma $C^*_{ab}$ of more than 20, preferably of more than 25.

11. The thin-film element according to claim 1 to 10, **characterized in that** the thin-film element appears colored in transmitted light and exhibits a color-shift effect.

12. The thin-film element according to claim 1 to 10, **characterized in that** the thin-film element appears colored in transmitted light and, when tilted, is substantially color constant with a changed chroma $C^*_{ab}$.

13. The thin-film element according to claim 1 to 12, **characterized in that** the thin-film element is combined with a color filter, preferably a colored printing layer or a colored vapor deposition layer.

14. The thin-film element according to claim 13, **characterized in that,** in a predetermined viewing direction, the thin-film element and the color filter each transmit substantially only in different, non-overlapping wavelength ranges.

**15.** The thin-film element according to claim 1 to 14, **characterized in that** the thin-film element is present in the form of patterns, characters or a code.

**16.** The thin-film element according to claim 1 to 15, **characterized in that** the thin-film element is combined with a relief structure, especially is applied to a diffractive relief structure or a microoptical relief structure.

**17.** A see-through security element for security papers, value documents and the like, having a support and, applied to the support, a thin-film element according to one of claims 1 to 16.

**18.** The see-through security element according to claim 17, **characterized in that** the thin-film element is applied to the support in the form of a motif.

**19.** The see-through security element according to claim 17 or 18, **characterized in that** the thin-film element is provided, on its top opposite the support, with an ink absorption layer.

**20.** Optically variable color pigments for a printing ink that are formed by thin-film elements according to one of claims 1 to 16.

**21.** A data carrier having a thin-film element according to one of claims 1 to 16 or a see-through security element according to one of claims 17 to 19, in which the thin-film element or the see-through security element is arranged in or over a transparent window region or a through opening in the data carrier.

**22.** A data carrier having a thin-film element according to one of claims 1 to 16 or a see-through security element according to one of claims 17 to 19, in which the thin-film element or the see-through security element is embedded in the data carrier, especially in that the data carrier includes a paper substrate in which the thin-film element or the see-through security element is embedded.

**23.** The data carrier according to claim 21 or 22, **characterized in that** the data carrier is a value document, such as a banknote, especially a paper banknote, a polymer banknote, a foil composite banknote, or identification card.

**Revendications**

**1.** Elément à couche mince avec une structure de couches d'interférence pour papiers de sécurité, documents de valeur et similaires, avec au moins deux couches d'absorption semi-transparentes et au moins une couche d'espacement diélectrique disposée entre ces au moins deux couches d'absorption, dans lequel

- les deux couches d'absorption sont respective-vement formées en un matériau avec un indice de réfraction N complexe dont la partie réelle n et la partie imaginaire k se différencient au moins dans une partie de la plage spectrale visible d'un facteur 5 ou plus, **caractérisé en ce que**
- l'élément à couche mince apparait de manière brillante métallique et sensiblement neutre de couleur lors de l'observation à la lumière réfléchie et de manière colorée à la lumière transmise, l'élément à couche mince présentant, à la lumière transmise, un chroma $C^*_{ab}$ indiqué dans l'espace chromatique CIELAB de plus de 15, et **en ce que**, lors d'une observation sous un angle de vue perpendiculaire,
- il apparaît comme étant vert à la lumière transmise et présente un chroma $C^*_{ab}$ de plus de 40, ou
- il apparaît comme étant jaune à la lumière transmise et présente de préférence un chroma $C^*_{ab}$ de plus de 20, ou
- il apparaît comme étant rouge à la lumière transmise et présente un chroma $C^*_{ab}$ de plus de 30, ou
- il apparaît comme étant bleu à la lumière transmise et présente un chroma $C^*_{ab}$ de plus de 30.

**2.** Elément à couche mince selon la revendication 1, **caractérisé en ce que** les deux couches d'absorption sont formées par des matériaux différents, la partie réelle n1 et la partie imaginaire k1 du matériau de l'une des deux couches d'absorption se différenciant au moins dans une partie de la plage spectrale visible d'un facteur 5 ou plus, et la partie réelle n2 et la partie imaginaire k2 du matériau de l'autre des deux couches d'absorption se différenciant d'un facteur 8 ou plus, de préférence d'un facteur 10 ou plus, de manière particulièrement préférée d'un facteur 15 ou plus.

**3.** Elément à couche mince selon la revendication 1 ou 2, **caractérisé en ce que** la partie réelle n et la partie imaginaire k des matériaux des deux couches d'absorption se différencient, au moins dans une partie de la plage spectrale visible, d'un facteur 8 ou plus, de préférence d'un facteur 10 ou plus, de manière particulièrement préférée d'un facteur 15 ou plus.

**4.** Elément à couche mince selon la revendication 1 ou 2, **caractérisé en ce que** la partie réelle n et la partie imaginaire k du matériau d'au moins l'une des deux couches d'absorption se différencient, dans l'ensemble de la plage spectrale visible, d'un facteur 5 ou plus, d'un facteur 8 ou plus, d'un facteur 10 ou plus, ou d'un facteur 15 ou plus.

**5.** Elément à couche mince selon l'une au moins des revendications 1 à 4, **caractérisé en ce que** l'une des couches d'absorption ou les deux couches d'absorption sont formées en argent.

**6.** Elément à couche mince selon l'une au moins des revendications 1 à 5, **caractérisé en ce que** l'une des couches d'absorption ou les deux couches d'absorption sont formées en aluminium.

**7.** Elément à couche mince selon l'une au moins des revendications 1 à 6, **caractérisé en ce que** la structure de couches d'interférence est une structure symétrique à trois couches avec une première couche d'absorption, une couche d'espacement diélectrique et une deuxième couche d'absorption.

**8.** Elément à couche mince selon l'une au moins des revendications 1 à 6, **caractérisé en ce que** la structure de couches d'interférence est une structure asymétrique à trois couches avec une première couche d'absorption en un premier matériau, une couche d'espacement diélectrique et une deuxième couche d'absorption en un deuxième matériau différent.

**9.** Elément à couche mince selon l'une au moins des revendications 1 à 8, **caractérisé en ce que** la couche d'espacement diélectrique est formé par du $SiO_x$ ou du $MgF_2$.

**10.** Elément à couche mince selon l'une au moins des revendications 1 à 9, **caractérisé en ce que** l'élément à couche mince présente, à la lumière transmise, un chroma $C^*_{ab}$ indiqué dans l'espace chromatique CIELAB de plus de 20, de préférence de plus de 25.

**11.** Elément à couche mince selon l'une au moins des revendications 1 à 10, **caractérisé en ce que** l'élément à couche mince apparait en couleur à la lumière transmise et présente un effet de basculement de couleur.

**12.** Elément à couche mince selon l'une au moins des revendications 1 à 10, **caractérisé en ce que** l'élément à couche mince apparaît en couleur à la lumière transmise et est sensiblement constant de couleur lors du basculement avec un chroma $C^*_{ab}$ modifié.

**13.** Elément à couche mince selon l'une au moins des revendications 1 à 12, **caractérisé en ce que** l'élément à couche mince est combiné avec un filtre coloré, de préférence une couche d'impression colorée ou une couche colorée d'application en phase vapeur.

**14.** Elément à couche mince selon la revendication 1, **caractérisé en ce que** l'élément à couche mince et le filtre coloré, en cas d'une direction d'observation prédéterminée, transmettent seulement dans des plages de longueurs d'onde respectivement différentes ne se superposant pas.

**15.** Elément à couche mince selon l'une au moins des revendications 1 à 14, **caractérisé en ce que** l'élément à couche mince se présente sous la forme de motifs, de symboles ou d'un codage.

**16.** Elément à couche mince selon l'une au moins des revendications 1 à 15, **caractérisé en ce que** l'élément à couche mince est combiné avec une structure en relief, en étant en particulier appliqué sur une structure en relief diffractive ou une structure en relief micro-optique.

**17.** Elément de sécurité translucide pour papiers de sécurité, documents de valeur et similaires, avec un support et un élément à couche mince selon l'une des revendications 1 à 16 appliqué sur le support.

**18.** Elément de sécurité translucide selon la revendication 17, **caractérisé en ce que** l'élément à couche mince est appliqué sous la forme d'un motif sur le support.

**19.** Elément de sécurité translucide selon la revendication 17 ou 18, **caractérisé en ce que** l'élément à couche mince est doté d'une couche de réception d'impression sur sa face supérieure située en vis-à-vis du support.

**20.** Pigments colorés variables optiquement pour une couleur d'impression, lesquels sont formés par de éléments à couche mince selon l'une des revendications 1 à 16.

**21.** Support de données avec un élément à couche mince selon l'une des revendications 1 à 16 ou un élément de sécurité translucide selon l'une des revendications 17 à 19, dans lequel l'élément à couche mince ou l'élément de sécurité translucide est disposé dans, ou par-dessus une zone de fenêtre transparente ou une ouverture traversante du support de données.

**22.** Support de données avec un élément à couche mince selon l'une des revendications 1 à 16 ou un élément de sécurité translucide selon l'une des revendications 17 à 19, dans lequel l'élément à couche mince ou l'élément de sécurité translucide est noyé dans le support de données, le support de données contenant en particulier un substrat de papier dans lequel l'élément à couche mince ou l'élément de sécurité translucide est intégré.

**23.** Support de données selon la revendication 21 ou 22, **caractérisé en ce que** le support de données est un document de valeur tel un billet de banque, en particulier un billet de banque en papier, un billet de banque polymère, un billet de banque composite ou une carte d'identité.

Fig. 1

Fig. 2

Fig. 3a

Fig. 3b

Fig. 4a

Fig. 4b

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2001028921 A1
- EP 1189079 A1
- WO 03068525 A1